# EUROPÄISCHE PATENTSCHRIFT

(11) **EP 0 410 338 B1**
(45) Veröffentlichungstag und Bekanntmachung des Hinweises auf die Patenterteilung: **16.03.1994**
(21) Anmeldenummer: 90114035.0
(22) Anmeldetag: 22.07.1990
(51) Int. Cl.: C03B 5/02

(54) **Schmelzaggregat zum Herstellen von Glas**
Melting vessel for the preparation of glass
Appareil de fusion pour la fabrication de verre

(30) Priorität: 27.07.1989 DD 331209
(43) Veröffentlichungstag der Anmeldung: 30.01.1991
(73) Patentinhaber: Müller, Friedrich, Dipl.-Ing., D-07768 Kahla (DE); Nüssle, Gerhard, Dr., D-07747 Jena (DE); Schreiber, Bernd, Dipl.-Ing., D-07747 Jena (DE)
(72) Erfinder: Müller, Friedrich, Dipl.-Ing., D-07768 Kahla (DE); Nüssle, Gerhard, Dr., D-07747 Jena (DE); Schreiber, Bernd, Dipl.-Ing., D-07747 Jena (DE)
(74) Vertreter: Müller-Gerbes, Margot, Dipl.-Ing.

(56) Entgegenhaltungen:
- DD-A- 234 262
- DE-B- 2 539 355
- GB-A- 616 451
- US-A- 2 512 761

## Beschreibung

Die Erfindung bezieht sich auf ein Schmelzaggregat zum Herstellen von Glas mit einem Bassin mit einer Stirnwand an der Einlegeseite und einer Durchlaßwand mit Durchlaß für das Schmelzbad an der der Stirnwand entgegengesetzten Seite und einem Oberofen, bei dem in dem Bassin ebenfalls an der der Stirnwand entgegengesetzten Seite ein Bodenwall quer angeordnet ist, der eine Schmelzzone von einer Läuterzone trennt und bei dem Mittel zum Beheizen des Oberofens und Elektroden zum direkten Beheizen der Schmelze in Querreihen vertikal angeordnet sind. Die Erfindung ist besonders geeignet zur Anwendung in U-Flammenwannen, Querflammenwannen und Unit-Meltern und soll hohe Schmelzleistungen ermöglichen.

Brennstoffbeheizte Schmelzöfen werden zur Erhöhung ihrer Effektivität in zunehmendem Umfang durch direkt in das Glasbad eingespeiste Elektroenergie zusätzlich beheizt. Hierzu werden unterschiedliche Elektroden, Elektrodenanordnungen und Stromsysteme verwendet, die neben der nach Ort und Größe differenzierten Wärmeentbindung unterschiedlichen Einfluß auf die sich im Glasbad einstellenden Strömungen ausüben.

Bekannt ist nach DE-B- 1471 992 die Anordnung einer Reihe von Stabelektroden entlang der Ofenlängsmitte und/oder die Anordnung einer Reihe von Stabelektroden quer zur Ofenlängsrichtung im Bereich der Läuterzone. Anordnungen dieser Art bewirken örtliche Konvektionsströmungen im Glasbad zur Verbesserung der Homogenisierung und Läuterung. Sie gestatten aber nur geringe Steigerungen der Schmelzleistung.

Bekannt ist ferner die Anordnung von aus dem Dreiphasennetz gespeisten Horizontalelektroden durch die Längsseiten eines Schmelzofens in drei Gruppen von zwei oder mehr Elektroden in Verbindung mit vertikal angeordneten Elektroden in der Gruppe vor dem Arbeitsteil nach DD-A- 69 673.

Nachteilig ist die begrenzte Möglichkeit der Konzentration der elektrischen Leistung im Bereich des Quellpunktes zur Stabilisierung der Gemengelage bei hohen Schmelzleistungen und die örtlich erhöhte Wärmeentbindung im Bereich der Seitenwände des Schmelzofens.

Aus der US-A- 2512 761 ist ein Glasschmelzofen bekannt, der durch Zwischenwände in eine Schmelzzone, eine Läuterzone und eine Absetzzone mit Auslaß unterteilt ist. Die Beheizung erfolgt zusätzlich zur Oberhitze mittels Gasbrennern mit in der Glasschmelze angeordneten Elektroden, die entweder in der Schmelzzone gleichmäßig verteilt angeordnet sind oder in einer durch Zwischenwände beidseitig abgeteilten verkleinerten Schmelzzone untergebracht sind. Auch diese Anlage hat einen hohen Energiebedarf, da sich keine einheitliche homogene ganze Glasschmelze erfassende Strömung ausbilden kann, vielmehr viele einzelne kleinere Strömungs- und Quellbereiche gebildet werden.

Bei höheren spezifischen Schmelzleistungen ist die gesamte Glasbadoberfläche mit Gemenge bedeckt, und ungenügend geschmolzenes oder geläutertes Glas gelangt zu den Verarbeitungsmaschinen.

Nach DD--A- 146 702 ist ein durch Brennstoff und Elektroenergie beheizter Schmelzofen bekannt, bei dem die Elektroenergie über im Bassin gleichmäßig verteilte Vertikalelektroden eingespeist wird und die Brennstoffbeheizung oberhalb der Gemengedecke mittels Deckenbrennern bei rekuperativer Luftvorwärmung erfolgt.

Nachteilig sind die aufwärts und abwärts gerichteten Vertikalströmungen im gesamten Bassin, die erhöhten Verschleiß des Bassinmaterials verursachen und bei vollständiger Bedeckung der Glasbadoberfläche mit Gemenge dazu führen können, daß ungenügend geschmolzenes und geläutertes Glas ausgetragen wird.

Nachteilig sind ferner der notwendige hohe Anteil an hochwertiger Elektroenergie, die aufwendige Anordnung und der hohe Wartungsaufwand von Deckenbrennern im Gewölbe des Schmelzofens und die aufwendige getrennte Steuerung der Zufuhr von Elektroenergie und Brennstoff längs des Schmelzofens. Die geringe Ausnutzung der Brennstoffenergie bei rekuperativer Luftvorwärmung bedingt einen hohen spezifischen Energieverbrauch.

Nach der DD-A- 234 262 wird zum Schmelzen und Läutern von Hartgläsern vorgeschlagen, in einem Schmelzofen nach Art eines Unit-Melters mehrere Reihen von Vertikalelektroden, eine Reihe von Bubblingdüsen, ein Schwimmrohr und gegebenenfalls einen Bodenwall zwischen zwei Reihen von Vertikalelektroden anzuordnen. Anordnungen dieser Art sind nur bei der Schmelze von Hartgläsern mit relativ geringer spezifischer Schmelzleistung und daher geringem Anteil einer mit Gemenge bedeckten Glasbadoberfläche zweckmäßig.

Nachteilig ist die Anordnung von Vertikalelektroden vor und hinter dem Bodenwall, die infolge der auftretenden Strömungen und der thermischen Belastung einen hohen Verschleiß des Feuerfestmaterials verursachen.

Nach der DE-B- 25 39 355 ist ein Schmelzofen bekannt, bei dem zwischen dem Schmelzteil und dem Läuter- und Homogenisierungsteil eine über den Boden des Schmelzteiles hochragende Schwelle angeordnet ist und bei dem in dem Läuter- und Homogenisierungsteil in einer oder mehreren Ebenen in einem Läuterbereich eine zusätzliche elektrische Beheizung des Glases bewirkende Elektroden unterhalb oder in Höhe des Bodens des Schmelzteiles angeordnet sind. Ferner sind Elektroden im Durchlaß und am Umfang und an den Gemengeeingabeöffnungen des Schmelzteiles angeordnet. Der Läuter- und Homogenisierungsteil ist erheblich tiefer als der Schmelzteil. Nachteilig ist dabei, daß das auf die gesamte Glasbadoberfläche aufgegebene Gemenge im Schmelzteil und im oberen Teil des Läuter- und Homogenisierungsteiles abschmilzt und erst in einer tiefer liegenden Zone des Läuter- und Homogenisierungsteiles stärker erhitzt und geläutert wird. Die tiefer liegende Läuterzone erfordert einen relativ langen Weg für die bei der Läuterung des Glases freiwerdenden Gasblasen bis zur Glasbadoberfläche. Gleichzeitig bewirkt die höhere Temperatur des Glases in der Läuterzone bis zur Glasbadoberfläche reichende Konvektionsströmungen und mögliche Rückströmungen über die hochragende Schwelle in dem Schmelzteil, die verfahrenstechnisch und im Hinblick auf den Verschleiß des Feuerfestmeterials unerwünscht sind.

Nachteilig ist ferner der erhöhte Aufwand für die notwendige tiefe Ausführung des Läuter- und Homogenisierungsteiles und für die notwendige Anordnung einer Vielzahl von Horizontalelektroden in mehreren Ebenen im Bereich des Läuter- und Homogenisierungsteiles. Die im Schmelzteil angeordneten Elektroden bewirken eine örtliche Energiezufuhr. Sie sind nur bedingt geeignet, die Gemengelage und die sich im Schmelzteil einstellenden Temperaturfelder und Glasströmmungen zu stabilisieren.

Schließlich ist durch die EP-B- 0 237 604 ein energiesparendes Verfahren zum Schmelzen von Glas bekannt, bei dem zwischen einem nur brennerbeheizten flachen Läuterbereich und einem mit einer elektrischen Zusatzheizung versehenen, vom Einlegebereich zum Läuterbereich flacher werdenden Schmelzbereich eine Schmelze vorgesehen ist. Die Gestaltung des zur Realisierung benutzten Schmelzaggregates läßt keine einheitliche und eindeutige Konvektionsströmung zustande kommen. Bei hohen spezifischen Schmelzleistungen besteht die Gefahr, daß Gemenge in den Läuterbereich eindringt und die Glasqualität verschlechtert wird. Auch findet durch die starken Strömungen im Läuterbereich eine erhebliche Korrosion am Feuerfestmaterial statt.

Die vorstehend aufgezeigten Nachteile können auch nicht durch die Anordnung einer elektrischen Zusatzbeheizung vor einer hochragenden Schwelle gemäß DD-A- 69 673 beseitigt werden.

Die über die in den Seitenwänden eines Schmelzofens angeordneten horizontalen Elektroden der ersten beiden Elektrodengruppen zugeführte Elektroenergie bewirkt örtliche Querströmungen der Glasschmelze, die die parallel zur Wannenlängsachse gerichtete Konvektionsströmung bremsen und zum Einschnüren der Gemengelage auf der Schmelzbadoberfläche führen. Bei hohen spezifischen Schmelzleistungen kann die Gemengelage nicht vor der Bodenschwelle stabilisiert werden. Es kommt zum Überschwimmen von Gemengehaufen über die Bodenschwelle und damit zum Austrag von ungenügend geschmolzenem bzw. geläutertem Glas.

Nachteil aller bisher bekannten Verfahren und Anordnungen zur Herstellung von Glas in mit Brennstoff und Elektroenergie beheizten Schmelzöfen ist es, daß bei hohen spezifischen Schmelzleistungen die Gemengelage nicht wirksam stabilisiert werden kann. Das Gemenge schwimmt mit steigendem Durchsatz auf Kosten einer für die Prozeßführung notwendigen freien Glasbadoberfläche bis zur hinteren Stirnwand. Dadurch wird der Quellbereich gestört und die zum Durchlaß führenden Glasströmungen verlaufen in tieferen und kälteren Schichten des Glasbades. Es sind hohe Oberofentemperaturen bis zu 1650°C hohe Elektroenergieanteile erforderlich, um den Austrag ungenügend geschmolzenen und ungenügend geläuterten Glases zu vermeiden. Dadurch sind wieder hohe Energieverbrauchswerte, ein hoher Verschleiß des Feuerfestmaterials und in Verbindung mit den hohen Flammentemperaturen entsprechend hohe, die Umwelt belastende Stickoxid-Anteile im Abgas bedingt.

Es ist das Ziel der Erfindung, Nachteile der bekannten Verfahren und Schmelzöfen zur Herstellung von Glas zu vermeiden und ein Schmelzaggregat zu schaffen, das bei hoher Schmelzleistung und reduzierter Oberofentemperatur Glas mit der erforderlichen Qualität herzustellen gestattet.

Dabei sollen der Material- und Energieverbrauch ebenso wie der Ausstoß von Stickoxiden gesenkt werden.

Der Erfindung liegt daher die Aufgabe zugrunde, ein Schmelzaggregat zum Herstellen von Glas der eingangs genannten Art so zu gestalten, daß sich auch bei hohen spezifischen Schmelzleistungen eine wirksam stabilisierte Gemengelage ergibt und die Ausbildung einer von Gemenge freien Schmelzbadoberfläche gewährleistet ist. Durch eine entsprechende Gestaltung des Bodens und durch eine entsprechende Anordnung der Heizelektroden des Schmelzaggregates soll erreicht werden, daß sich zwischen dem Aufgabebereich des Gemenges und dem Auslauf der geläuterten Glasschmelze nur eine, den Quellbereich mit erfassende Konvektionswalze ausbildet und Querströmungen, die diese Längskonvektionsströmung stören, weitestgehend vermieden werden.

Das aus dem oberen Teil des Quellbereiches in Richtung Durchlaß strömende Glas soll längere Zeit im Bereich der Glasbadoberfläche verbleiben und ohne Ausbildung von Konvektionswalzen mit der Entnahmeströmung gleichmäßig über die Wannenbreite in den Bereich des Wannenbodens vor dem Durchlaß absinken.

Gemäß der Erfindung wird diese Aufgabe dadurch gelöst, daß der Bodenwall bei 75 bis 90 % des Abstandes zwischen Stirnseite und Durchlaßseite, nahe dem Durchlaß angeordnet ist, daß die Höhe des Bodenwalls 75 bis 90 % der Schmelzbadtiefe beträgt und daß die Elektroden in zwei Reihen vor dem Bodenwall angeordnet sind, wobei die der Stirnwand am nächsten angeordnete Reihe einen Abstand von der Stirnwand hat, der gleich oder größer als der halbe Abstand zwischen der Stirnwand und der Durchlaßwand ist, jeweils benachbarte Elektroden in beiden Reihen ein Viereck, ein Trapez, Rechteck, vorzugsweise aber Quadrat bilden und die Eintauchtiefe der Elektroden 40 bis 100 %, vorzugsweise 70 bis 90 % der Höhe des Bodenwalls beträgt.

Die Anzahl der in beiden Reihen angeordneten Elektroden soll vorteilhaft durch vier teilbar sein. Die Elektrodenanordnung in den Eckpunkten eines Quadrates oder einer Quadratkette gewährleistet eine raumfüllende Verteilung der Elektroenergie im Glasbad vor dem Bodenwall. Die Seitenlänge der von den Elektroden gebildeten Vierecke liegt vorteilhafterweise zwischen 700 und 2000 mm; sie ist von der Größe des Schmelzaggregates, der Glasart und den Einschmelzbedingungen abhängig. Die Abstände der dem Bodenwall und den Seitenwänden am nächsten angeordneten Elektroden von dem Bodenwall bzw. den. Seitenwänden betragen 30 bis 50 % der Seitenlänge.

Für die Wirkungsweise der Erfindung ist es von Vorteil, wenn die Elektroden in zwei voneinander getrennten, um 90° phasenverschobenen Einphasenwechselspannungssystemen zusammengefaßt sind, wobei jeweils diagonal angeordnete Elektroden zum selben Einphasenwechselspannungssystem gehören. Stromflüsse können im Glasbad nur zwischen den diagonal in den Eckpunkten angeordneten Elektroden auftreten.

Die Einphasenwechselspannungssysteme können in bekannter Weise aus dem Drehstromnetz über einen entsprechend geschalteten Netztransformator entnommen werden. In Abhängigkeit von der Zahl der Elektroden können je Einspeisung mehrere Elektroden parallel geschaltet sein. Die Schaltung gewährleistet bis auf Bereiche in unmittelbarer Elektrodenenähe eine gleiche elektrische Leistungsdichte in einem quaderförmigen Volumenelement des Glasbades vor dem Bodenwall, in dem sich die Elektroden befinden. Die erfindungsgemäße Anordnung und Schaltung der Elektroden vermeidet eine Destabilisierung der elektrischen Leistungsverteilung und die dabei auftretenden heißen Strompfade im Glasbad zwischen den Elektroden.

Über die Elektroden sind 10 bis 60 %, vorzugsweise 30 bis 40 % des zum Schmelzen von Glas notwendigen theoretischen Wärmebedarfs einspeisbar. Dabei ist zu beachten, daß bei energetisch gut ausgelegten Aggregaten der theoretische Wärmebedarf nur etwa die Hälfte des Gesamtenergiebedarfs beträgt, daß also über die Elektroden nicht mehr als 5 bis 30 % des Gesamtenergiebedarfs in die Schmelze eingespeist werden.

Im Rahmen des angegebenen theoretischen Wärmebedarfs wird die einzuspeisende elektrische Leistung mit Hilfe von Thyristorstellern oder Schubtransformatoren verstellt.

Wird das Schmelzaggregat mit Brennstoff- und Elektroenergie gemischt beheizt, so ist es empfehlenswert, den Elektroden, die sämtlich in einem gegenüber dem übrigen Bassinboden bis 100 mm angehobenen Bodenbereich angeordnet sein können und sich vor dem Bodenwall befinden, die gesamte Elektroenergie einzuspeisen. In dem quaderförmigen, über die Bassinbreite reichenden Volumenelement des Schmelzbades unmittelbar vor dem Bodenwall wird also die gesamte Elektroenergie in Form von Joulescher Wärme freigegeben. Der angehobene Bodenbereich soll metallische Verunreinigungen im Glas von den Elektroden fernhalten. Außerdem kann im tiefer gelegenen Bassinboden ein Ablaß für verunreinigtes Glas vorgesehen sein.

Durch die vor dem Bodenwall konzentrierte Elektroenergieeinspeisung wird eine Quellzone mit einem starken Antrieb für die unter das Gemenge führende Konvektionswalze über die gesamte Bassinbreite gebildet. Die diesem Bereich am Bassinboden aus dem in der Nähe der Stirnwand liegenden vorderen Bassinteil zuströmende Glasschmelze steigt in der Quellzone auf, der größte Teil der Glasschmelze wird unter das Gemenge zurückgeführt und der mit der Entnahmeströmung zum Durchlaß geführte Teil der Glasschmelze wird durch den Bodenwall bei 75 % bis 90 % der Bassinlänge zwangsweise auf eine Höhe von 75 % bis 90 % des Glasstandes gebracht.

Im Zusammenwirken der im Glasbad freigesetzten Elektroenergie mit der aus dem Oberofen in das Glasbad eingestrahlten Energie wird die aufsteigende Glasschmelze über die gesamte Bassinbreite soweit erwärmt, daß einerseits mit der Konvektionswalze ausreichend Wärme zum Abschmelzen des Gemenges unter den Gemengeteppich transportiert und dadurch die Gemengelage vor der Quellzone stabilisiert wird und andererseits die Entnahmeströmung ausreichend heißes Glas über den Bodenwall transportiert, das infolge seiner geringen Dichte längere Zeit im Bereich der gemengefreien Glasbadoberfläche verbleibt und erst allmählich mit der Entnahmeströmung im Bassinteil nach dem Bodenwall gleichmäßig über die gesamte Bassinbreite zum Durchlaß absinkt, ohne daß es zum Konvektionsaustausch zwischen Glasschichten unterschiedlicher Höhe oder zum Rückströmen über den Bodenwall kommt.

Im Bassinteil vor dem Bodenwall erfaßt die Konvektionsströmung das gesamte Glasvolumen mit günstigen Bedingungen für ein Einmischen des aus dem Gemenge abschmelzenden frischen Glases bei gleichzeitiger Homogenisierung infolge der an der Glasbadoberfläche oder dem Gemenge und im Bereich des Bassinbodens auftretenden Geschwindigkeitsgradienten senkrecht zur Strömungsrichtung.

Im Bassinteil hinter dem Bodenwall verbleibt die Entnahmeströmung längere Zeit im Bereich der gemengefreien Glasbadoberfläche mit günstigen Bedingungen für eine gute Restläuterung. Gegenüber bekannten Schmelzverfahren und Schmelzaggregaten kann die Oberofentemperatur bei vergleichbarer spezifischer Schmelzleistung um ca. 50 K abgesenkt werden. Die niedrigen Oberofentemperaturen bedeuten einen geringeren spezifischen Energieverbrauch des Schmelzofens, einen geringeren Verschleiß des Feuerfestmaterials und damit eine höhere Lebensdauer des Schmelzofens. Die mit den niedrigeren Oberofentemperaturen verbundenen niedrigeren Flammentemperaturen haben geringere Stickoxidanteile im Abgas zur Folge.

Nachstehend wird die Erfindung anhand der schematischen Zeichnung einer Ausführungsform näher erläutert.

Es zeigen:

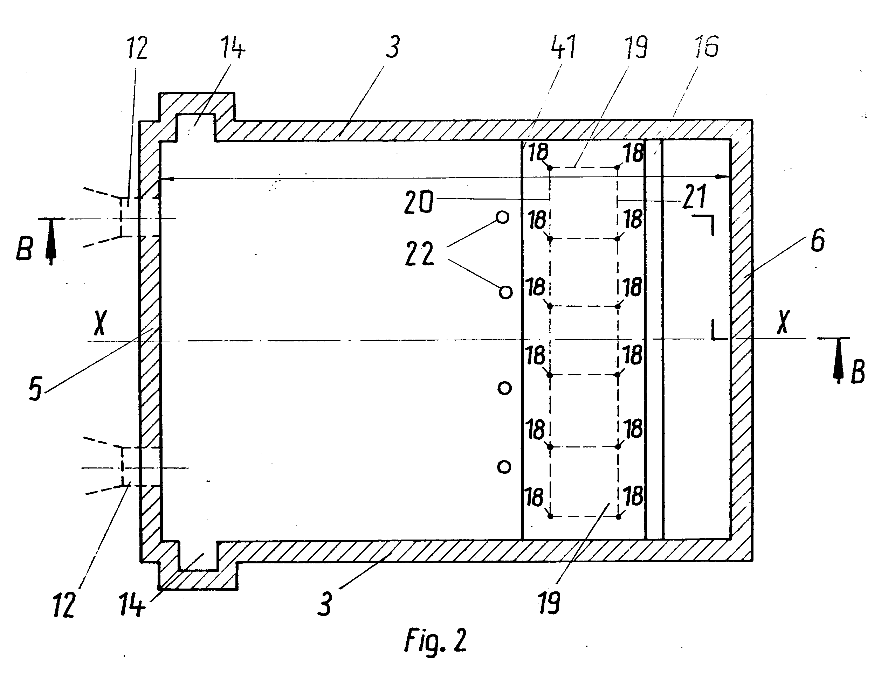

- Fig. 1: einen Vertikalschnitt des erfindungsgemäßen Schmelzaggregates entlang der Linie B-B der Fig. 2;
- Fig. 2: einen Horizontalschnitt durch das Bassin des Schmelzaggregates gemäß der Linie A-A der Fig. 1 und

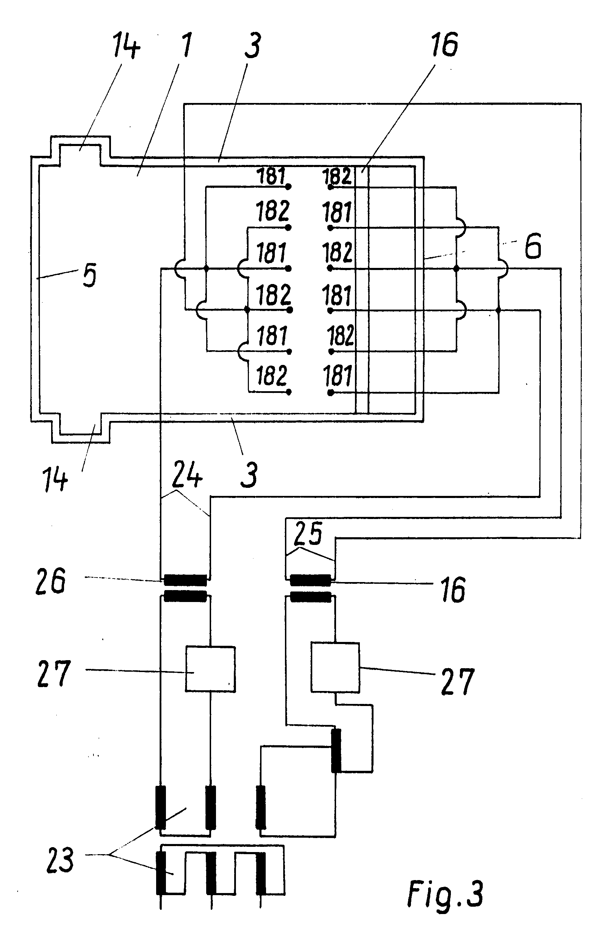

- Fig. 3: eine Draufsicht des Bassins mit der elektrischen Schaltung der Elektroden.

Das Ausführungsbeispiel zeigt ein Schmelzaggregat nach Art einer U-Flammenwanne. Es besteht aus einem Bassin 1 und einem Oberofen 2.

Das Bassin 1 besitzt zwei Seitenwände 3, einen Boden 4, eine vordere Stirnwand 5 und eine Durchlaßwand 6 mit einem Durchlaß 7, durch den die Glasschmelze 8 zu den nicht dargestellten Verarbeitungseinrichtungen gelangt.

Der Oberofen 2 wird gebildet aus einem Gewölbe 9 und Abschlußwänden 10, wobei sich über der Stirnwand 5 zwei Brenner mit Brenneröffnungen 11 (jeweils nur einer/eine sichtbar) und Brennermäulern 12 befinden. Die Brenneröffnungen tragen zur Ausbildung von Flammen 13 bei.

In den Seitenwänden 3 sind in der Nähe der Stirnwand 5 Vorrichtungen 14 zum Einlegen von Gemenge 15 angeordnet.

Bei 85 % der Länge l des Bassins 1 ist ein Bodenwall 16 mit seiner oberen Vorderkante und mit einer Höhe von 80 % des Glasstandes 17 angeordnet. Vor dem Bodenwall 16 befinden sich in Reihen 20; 21 Elektroden 18 einer elektrischen Zusatzheizung, die die Eckpunkte einer Kette von fünf Quadraten 19 quer zur Bassinlängsachse X-X bilden. Die erste Elektrodenreihe 20 ist dabei 67 % der Bassinlänge 1 von der Stirnwand 5 entfernt.

Der Abstand der sich unmittelbar am Bodenwall 16 bzw. an den Seitenwänden 3 befindlichen Elektroden 18 beträgt 50 % der Seitenlänge der durch die Elektroden 18 gebildeten Quadrate 19. Die Elektroden 18 können vorzugsweise aus Molybdän bestehen.

Der Bassinboden ist in einem Teil 41 der Elektroden gegenüber dem übrigen Bassinboden 4 angehoben. Unmittelbar vor dem angehobenen Teil 41 des Bassinbodens 4 befinden sich Mittel 22 zum Ablassen von verunreinigtem Glas.

Über einen Netztransformator 23 wird die in das Glasbad einzuspeisende Elektroenergie mittels zweier getrennter, um 90° phasenverschobener Einphasen-Wechselspannungssysteme den Stromkreisen 24; 25 und den Elektroden 18 zugeführt, wobei die elektrische Leistung durch die vor Ofentransformatoren 26 angeordneten Thyristorsteller 27 verstellt werden kann.

Jeweils diagonal gegenüberliegende Elektroden 181 bzw. 182 werden vom gleichen Einphasen-Wechselspannungssystem gespeist. Die Länge der Elektroden 18 im Glasbad beträgt ca. 90 % der Höhe des Bodenwalles 16. Der Anteil der eingespeisten Elektroenergie beträgt rd. 40 % des zum Schmelzen von Glas notwendigen theoretischen Wärmebedarfs.

Die erfindungsgemäße Anordnung der verwendeten zwölf Elektroden 18 in der beschriebenen Schaltung vor dem Bodenwall 16 gewährleistet, daß die dem Schmelzofen zugeführte Elektroenergie im Glasbad über die gesamte Wannenbreite zur Ausbildung einer Quellzone 28 und einer stabilen Konvektionswalze 29 führt.

Dadurch wird die Lage des Gemenges 15 vor der Quellzone 28 stabilisiert und es entsteht eine von Gemenge 15 freie Glasbadoberfläche über den Elektroden 18 von der Quellzone 28 bis zur Durchlaßwand 6 des Bassins 1.

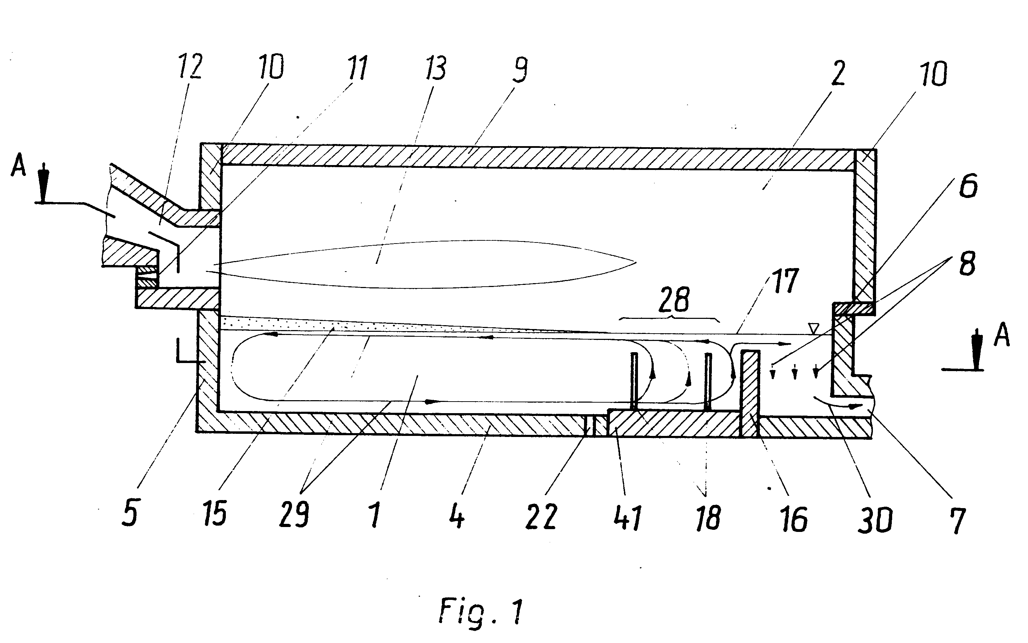

Die mit der Transportströmung zum Durchlaß 7 geführte Glasschmelze 8 wird in der Quellzone 28 im Zusammenwirken von Flammen- und Elektrobeheizung erwärmt, strömt zwangsweise in einer Höhe von mindestens 80 % des Glasstandes über den Bodenwall 16, verbleibt infolge seiner geringeren Dichte längere Zeit im Bereich der gemengefreien Glasbadoberfläche mit günstigen Bedingungen für die Restläuterung und sinkt, wie in Fig. 1 durch Pfeile 8 angedeutet, infolge der Entnahmeströmung 30 allmählich über die gesamte Bassinbreite und schichtweise zum Durchlaß 7 ab.

Die im Ausführungsbeispiel genannten Prozentzahlen können im Bedarfsfall in dem Rahmen verändert werden, den das Wesen der Erfindung setzt. Obgleich die im Ausführungsbeispiel verwendete Art der Oberofenbeheizung als günstig angesehen wird, ist die Erfindung weder an die Brenneranordnung noch an die Beheizungsart für den Oberofen gebunden.

## Patentansprüche

1. Schmelzaggregat zum Herstellen von Glas mit einem Bassin (1) mit einer Stirnwand (5) an der Einlegeseite und einer Durchlaßwand (6) mit Durchlaß (7) für das Schmelzbad an der der Stirnwand entgegengesetzten Seite und einem Oberofen (2), bei dem in dem Bassin (1) ebenfalls an der der Stirnwand (5) entgegengesetzten Seite ein Bodenwall (16) quer angeordnet ist, der eine Schmelzzone von einer Läuterzone trennt und bei dem Mittel (11) zum Beheizen des Oberofens (2) und Elektroden (18) zum direkten Beheizen der Schmelze in Querreihen vertikal angeordnet sind, **gekennzeichnet dadurch**, daß der Bodenwall (16) bei 75 bis 90 % des Abstandes zwischen Stirnwand (5) und Durchlaßwand (6), nahe dem Durchlaß (7), angeordnet ist, daß die Höhe des Bodenwalls (16) 75 bis 90 % der Schmelzbadtiefe beträgt und daß die Elektroden (18) in zwei Reihen (20, 21) vor dem Bodenwall (16) angeordnet sind, wobei die der Stirnwand (5) am nächsten angeordnete Elektrodenreihe (20) einen Abstand von der Stirnwand (5) hat, der gleich oder größer als der halbe Abstand zwischen der Stirnwand von der Durchlaßwand (6) ist, jeweils benachbarte Elektroden in beiden Reihen ein Viereck, vorzugsweise ein Quadrat (19), bilden und die Eintauchhöhe der Elektroden (18) 40 bis 100 %, vorzugsweise 70 bis 90 %, der Höhe des Bodenwalles beträgt.

2. Schmelzaggregat gemäß Anspruch 1,
**gekennzeichnet dadurch**, daß im Bereich der Elektroden (18) der Bassinboden (41) über die gesamte Breite des Bassins angehoben ist.

3. Schmelzaggregat gemäß Anspruch 2,
**gekennzeichnet durch** eine durch vier teilbare Anzahl von Elektroden (18).

4. Schmelzaggregat gemäß Anspruch 3,
**gekennzeichnet dadurch**, daß die Seitenlängen der Vierecke (19) zwischen 700 und 2000 mm liegen und die Abstände der dem Bodenwall (16) und den Seitenwänden (3) am nächsten angeordneten Elektroden (18) von diesem Bodenwall bzw. diesen Seitenwänden 30 bis 50 % der Seitenlängen betragen.

5. Schmelzaggregat gemäß Anspruch 4,
**gekennzeichnet dadurch**, daß die Elektroden (18) in zwei voneinander getrennten, um 90° phasenverschobenen Einphasenwechselspannungssystemen zusammengefaßt sind, wobei jeweils diagonal angeordnete Elektroden an dasselbe Einphasenwechselspannungssystem angeschlossen sind.

6. Schmelzaggregat gemäß Anspruch 5,
**gekennzeichnet dadurch**, daß über die Elektroden (18) 10 bis 60 %, vorzugsweise 30 bis 40 % ,des zum Schmelzen des Glases notwendigen theoretischen Wärmebedarfs eingespeist werden.

## Claims

1. Melting plant for the production of glass having a reservoir (1) with a front wall (5) on the loading side and an exit wall (6) with an outlet (7) for the melting bath on the side opposite the front wall, and having an upper furnace (2), wherein a base wall (16) is arranged transversely in the reservoir (1) also on the side opposite the front wall (5), which base wall (16) separates a melting zone from a refining zone, and wherein means (11) for heating the upper furnace (2), and electrodes (18) for the direct heating of the molten mass are arranged vertically in crossrows, characterised in that the base wall (16) is arranged near the outlet (7) at 75 to 90% of the distance between the front wall (5) and the exit wall (6), in that the height of the base wall (16) is 75 to 90% of the depth of the melting bath, and in that the electrodes (18) are arranged in two rows (20, 21) in front of the base wall (16), the row (20) of electrodes arranged closest to the front wall (5) being at a distance from the front wall (5) which equals or is greater than half the distance between the front wall and the exit wall (6), with respective adjacent electrodes in the two rows forming a rectangle, preferably a square (19), and the immersion height of the electrodes (18) being 40 to 100%, preferably 70 to 90%, of the height of the base wall.

2. Melting plant according to claim 1,
characterised in that, in the region of the electrodes (18), the base (41) of the reservoir is raised across the entire width of the reservoir.

3. Melting plant according to claim 2,
characterized by a number of electrodes (18) which is divisible by four.

4. Melting plant according to claim 3,
characterized in that the lengths of the sides of the rectangle (19) are between 700 and 2000 mm and the distances between the electrodes (18) arranged closest to the base wall (16) and to the side walls (3) from this base wall and from these side walls, respectively, are 30 to 50% of the lengths of the sides.

5. Melting plant according to claim 4,
characterised in that the electrodes (18) are combined in two single-phase alternating voltage systems which are separated from each other and out of phase by 90°, with respective diagonally-arranged electrodes being connected to the same single-phase alternating voltage system.

6. Melting plant according to claim 5,
characterised in that 10 to 60%, preferable 30 to 40% of the theoretical heat requirement for melting the glass is supplied by way of the electrodes (18).

## Revendications

1. Appareil de fusion pour la fabrication de verre, comprenant une cuve (1) avec une paroi frontale (5) sur le côté enfournement et une paroi de sortie (6) comportant une sortie (7) pour le verre en fusion sur le côté opposé à la paroi frontale, et avec un dessus de four (2), une cloison de fond (16) étant disposée transversalement dans la cuve (1), également du côté opposé à la paroi frontale (5), cette cloison séparant une zone de fusion d'une zone d'affinage, des moyens (11) étant prévus pour le chauffage du dessus de four (3) et des électrodes (18) étant disposées verticalement en rangées transversales en vue du chauffage direct du verre en fusion, **caractérisé** par le fait que la cloison de fond (16) est disposée près de la sortie (7), à 75 à 90 % de la distance comprise entre la paroi frontale (5) et la paroi de sortie (6), que la hauteur de' la cloison de fond (16) correspond à 75 à 90 % de la profondeur du bain de verre en fusion, que les électrodes (18) sont disposées en deux rangées (20, 21) devant la cloison de fond (16), la rangée d'électrodes (20) la plus proche de la paroi frontale (5) étant séparée de cette dernière d'une distance qui est égale ou supérieure à la moitié de la distance entre la paroi frontale et la paroi de sortie (6), les électrodes respectivement voisines dans les deux rangées formant un quadrilatère, de préférence un carré (19) et la hauteur de pénétration des électrodes (18) étant comprise entre 40 et 100 %, de préférence entre 70 et 90 % de la hauteur de la cloison de fond.

2. Appareil de fusion suivant la revendication 1, **caractérisé** par le fait que le fond (41) de la cuve est surélevé dans la zone des électrodes (18), sur toute la largeur de la cuve.

3. Appareil de fusion suivant la revendication 2, **caractérisé** par un nombre d'électrodes (18) divisible par quatre.

4. Appareil de fusion suivant la revendication 3, **caractérisé** par le fait que la longueur des côtés des quadrilatères (19) est comprise entre 700 et 2000 mm et que les électrodes (18) les plus proches de la cloison de fond (16) et des parois latérales (3) sont éloignées de cette cloison et de ces parois d'une distance correspondant à 30 à 50 % de la longueur des côtés.

5. Appareil de fusion suivant la revendication 4, **caractérisé** par le fait que les électrodes (18) sont groupées en deux systèmes de tension alternative monophasée séparés, déphasés de 90°, les électrodes diagonalement opposées étant raccordées au même système de tension alternative monophasée.

6. Appareil de fusion suivant la revendication 5, **caractérisé** par le fait que 10 à 60 %, de préférence 30 à 40 % de la chaleur théorique nécessaire pour la fusion du verre sont apportés par les électrodes.
